# EUROPÄISCHE PATENTSCHRIFT

(11) **EP 3 145 322 B1**
(45) Veröffentlichungstag und Bekanntmachung des Hinweises auf die Patenterteilung: **18.11.2020**
(21) Anmeldenummer: 15726880.6
(22) Anmeldetag: 19.05.2015
(51) Int. Cl.: A23K 10/00, A23K 10/28, A23K 10/10, A23K 10/40, A23K 50/00

(54) **VERFAHREN ZUR HERSTELLUNG EINES FLEISCHBASIERTEN FUTTERMITTELKONZENTRATS, FLEISCHBASIERTES FUTTERMITTELKONZENTRAT SOWIE FLEISCHBASIERTER FUTTERDRINK**
METHOD FOR PRODUCING A MEAT-BASED ANIMAL FEED CONCENTRATE, MEAT-BASED ANIMAL FEED CONCENTRATE AND MEAT-BASED ANIMIAL DRINK
PROCÉDÉ DE PRÉPARATION D'UN CONCENTRÉ D'ALIMENTATION ANIMALE À BASE DE VIANDE, CONCENTRÉ D'ALIMENTATION ANIMALE À BASE DE VIANDE ET BOISSON POUR ANIMAUX À BASE DE VIANDE

(30) Priorität: 19.05.2014 DE 102014107054
(43) Veröffentlichungstag der Anmeldung: 29.03.2017
(73) Patentinhaber: Deuerer, Hans-Jürgen, 75015 Bretten (DE)
(72) Erfinder: Deuerer, Hans-Jürgen, 75015 Bretten (DE)
(74) Vertreter: Gramm, Lins & Partner Patent- und Rechtsanwälte PartGmbB
(86) Internationale Anmeldenummer: PCT/EP2015/060982
(87) Internationale Veröffentlichungsnummer: WO 2015/177138

(56) Entgegenhaltungen:
- EP-A1- 1 527 699
- WO-A1-2010/133376
- GB-A- 1 549 196
- US-A- 5 759 598
- US-A1- 2005 008 757
- US-A1- 2011 217 419

## Beschreibung

Die Erfindung betrifft ein Verfahren zur Herstellung eines fleischbasierten Futtermittelkonzentrats. Des Weiteren betrifft die Erfindung ein fleischbasiertes Futtermittelkonzentrat erhältlich durch das erfindungsgemäße Verfahren, einen fleischbasierten Futterdrink, die Verwendung des fleischbasierten Futterdrinks als Tierfutter für fleischfressende Haustiere sowie eine Verpackungseinheit für das fleischbasierte Futtermittelkonzentrat und/oder den fleischbasierten Futterdrink.

Fleischfresser, wie Hund und Katze, die als Haustiere gehalten werden, werden häufig nicht artgerecht ernährt.

In der Natur ernähren sich diese Tierarten hauptsächlich von Beutetieren, also durch die Aufnahme tierischer Proteine in Form von Fleisch.

Es ist ernährungsphysiologisch sinnvoll, bei der Bereitstellung von Futtermitteln für fleischfressende Tiere einen hohen Proteingehalt bei gleichzeitig niedrigem Kohlenhydratgehalt vorzusehen.

Neben dem als Hauptmahlzeit verfütterten Futter in Form von Trocken-, Halbfeucht- oder Feuchtfutter werden zunehmend auch Snacks beziehungsweise Futtermittel-Ergänzungsprodukte vom Verbraucher nachgefragt, die zur gezielten Aufwertung des Haupt-Futtermittels, eingesetzt werden sollen.
Fleischfresser, die nicht artgerecht ernährt werden, haben unter anderem eine erhöhte Anfälligkeit für Stoffwechselerkrankungen. Fleischfressern sollte daher ein ernährungsphysiologisch geeignetes, natürlichem Futterfleisch ähnliches, Futtermittel verfüttert werden.

US 5,759,598 betrifft fermentierte Nahrungsmittelprodukte für Tiere.
US 2005/008757 beschreibt ein Fleischprodukt zur Fütterung von Tieren.
GB 1 549 196 betrifft Nahrungsprodukte und Verfahren zu deren Herstellung.

Entsprechend ist es wünschenswert, ein Futtermittel bereitzustellen, das beispielsweise zur gezielten Aufwertung des ohnehin verfütterten Futters oder beispielsweise auch in besonderen Fällen, wie beispielsweise bei bestimmten Erkrankungen der Haustiere, als alleiniges Futtermittel verfüttert werden kann.

Auch sind Situationen denkbar, bei welchen neben einer optimalen Nährstoffaufnahme auch eine Optimierung der täglichen Flüssigkeitsaufnahme, hauptsächlich über Wasser, im Fokus steht. Weiterhin kann es - insbesondere in Ländern mit stark gechlortem Wasser - wünschenswert sein, ein Futtermittel bereitzustellen, das statt mit Wasser mit anderen Flüssigkeiten, z.B. mit Katzenmilch oder ähnlichem, angerührt werden kann, um die Akzeptanz des Futtermittel bei gleichzeitiger Versorgung des Tieres mit Flüssigkeit über das Futtermittel zu erhöhen.

Gelöst wird die Aufgabe durch ein Verfahren zur Herstellung eines fleischbasierten Futtermittelkonzentrats gemäß Anspruch 1, wobei
a. ein Kutter zur Herstellung eines Futtermittel-Vorprodukts mit wenigstens folgenden Zutaten beschickt wird, die eine Temperatur aufweisen, die gleich oder geringer ist als + 25°C insbesondere zwischen -18°C und +7°C: wenigstens ein Bestandteil der Gruppe Fleisch
b. die Zutaten zu einem Futtermittel-Vorprodukt mit einem Feuchtigkeits-Gehalt zwischen 30 Gew.-% und 60 Gew.-% und einer Korngrößenverteilung im Bereich von 10 mm bis 0,1 mm oder kleiner für 5 bis 15 min gekuttert werden
c. gegebenenfalls das Futtermittel-Vorprodukt getrocknet wird, bis ein Feuchtigkeitsgehalt zwischen 5 Gew.-% und 40 Gew.-% erreicht ist,
d. das Futtermittel-Vorprodukt mit einem Feuchtigkeitsgehalt zwischen 5 Gew.% und 40 Gew.% zu Partikel mit einer Größe zwischen 0,5 mm und 5 mm zerkleinert wird, und
e. den Partikeln des getrockneten Futtermittel-Vorprodukts ein oder mehrere Verdickungsmittel, insbesondere ausgewählt aus der Gruppe: Guarkernmehl, Carboxymethylcellulose, Xanthan, Carragen und Stärke hinzugefügt und so das fleischbasierte Futtermittelkonzentrat erhalten wird.

In einer Ausführungsform wird das Futtermittel-Vorprodukt dabei nach dem Schritt b.) nach dem Kuttern und vor dem Schritt c.) ausgeformt, z. B. durch Extrusion. Überraschenderweise wurde herausgefunden, dass das erfindungsgemäße Verfahren zu einem Futtermittelkonzentrat führt, das nach Zugabe von Flüssigkeiten, wie beispielsweise Wasser, Kuhmilch, sogenannter Katzenmilch - also einem für Katzen vorgesehenen Produkt - zu einem Futterdrink entwickelt werden kann, der bei fleischfressenden Haustieren eine besondere Akzeptanz hat.

Unter einem fleischbasierten Futtermittelkonzentrat wird ein Futtermittelkonzentrat verstanden, das einen Gehalt von wenigstens 30 Gew.-% an Fleisch, bezogen auf das Gesamtgewicht des Futtermittel-Vorprodukts beziehungsweise des Futtermittelkonzentrats, enthält.

Unter "Fleisch" werden alle Fleischteile geschlachteter warmblütiger Landtiere, frisch oder durch ein geeignetes Verfahren haltbar gemacht, sowie alle zur Tierfutterverarbeitung zugelassenen Erzeugnisse aus der Verarbeitung von Tierkörpern von Landtieren, verstanden.

Der Fleischanteil im Futtermittel-Vorprodukt liegt in einer vorteilhaften Ausführungsform zwischen 30 Gew.-% und 95 Gew.-%, insbesondere zwischen 40 Gew.-% und 80 Gew.-%, weiter insbesondere zwischen 60 Gew.-% und 70 Gew.-%. Diese Ausführungsform bietet den Vorteil, dass der fleischbasierte Futterdrink bzw. das zubereitete fleischbasierte Futtermittelkonzentrat von den Tieren besonders gern aufgenommen wird, wobei die Akzeptanz mit zunehmendem Fleischanteil weiter steigt.

In einer vorteilhaften Ausführungsform weisen die Zutaten zur Herstellung des Futtermittel-Vorprodukts eine Temperatur zwischen -18°C und +7°C auf. Diese Ausführungsform bietet den Vorteil, dass die Zeit, die zum Kuttern benötigt wird, bis das im Futtermittel-Vorprodukt befindliche Eiweiß aufgeschlagen ist und ein gebundenes Futtermittel-Vorprodukt entsteht, lediglich etwa 5 bis 15 Minuten, wie etwa 5 bis 10 Minuten beträgt. Entsprechend ist das Verfahren besonders wirtschaftlich im Hinblick auf die aufzuwendende Zeit und Energie. Durch das Kuttern entsteht bei dieser Ausführungsform ein Futtermittel-Vorprodukt, dessen Temperatur bis zu etwa 15°C beträgt.

Unter "Kutter" und "kuttern" wird vorliegend verstanden, dass die im Kutter vorliegenden Bestandteile fein- und feinstverkleinert werden. Das heißt die Korngrößenverteilung liegt im Bereich von 10 mm bis 0,1 mm oder kleiner. Das Kuttern zeichnet sich durch einen Prozess aus, bei dem möglichst bei vielen Zellen die Zellmembranen geschädigt werden, um so eine feine, gleichmäßige Masse zu erhalten. Dem Fachmann sind "Kutter" oder engl. "Cutter" bekannt. Dabei werden die Messer mit einer Geschwindigkeit von mindestens 60 Umdrehungen pro Minute, wie z.B. mindestens 200 Umdrehungen pro Minute z.B. mindestens 2860 Umdrehungen pro Minute verwendet. So findet ein zumindest teilweises Denaturieren der Proteine während des Kutterns statt.

In einer anderen vorteilhaften Ausführungsform erfolgt eine zusätzliche Kühlung, beispielsweise durch die Zugabe von Eis oder durch eine Kühlung des Kutters mittels Kühlelementen, so dass eine Temperatur von maximal etwa 5°C erreicht wird. Bei einer Temperatur von maximal etwa 5°C des entstehenden Futtermittel-Vorprodukts ist dieses in seiner Textur besonders homogen.

Der Feuchtigkeitsgehalt des Futtermittel-Vorprodukts kann vorteilhafterweise zwischen 40 Gew.-% und 50 Gew.-% oder zwischen 50 Gew.-% und 60 Gew.-%, wie 54 - 60 Gew.-% liegen. Der Vorteil, ein Futtermittel-Vorprodukt mit diesem Feuchtigkeitsgehalt zwischen 40 Gew.-% und 50 Gew.-% einzusetzen, liegt darin, dass - wenn getrocknet werden muss - der Trocknungsschritt kurz gehalten werden kann, so dass die Nährstoffe im überwiegend fleischbasierten Futtermittel möglichst umfangreich erhalten bleiben können.

Wenn eine Ausformung des Futtermittel-Vorprodukts erfolgt, kann diese durch Extrusion - also durch ein thermisches Verfahren, bei dem die Bestandteile eines Produkts durch schlagartiges Verdampfen des produkteigenen Wassers aufgeschlossen werden und durch gleichzeitiges Pressen durch eine Düse eine bestimmte Form erhalten - vonstatten gehen.

Grundsätzlich kann eine Ausformung des Futtermittel-Vorprodukts auch nichtthermisch erfolgen, wobei dann das Futtermittel-Vorprodukt einen Dampftunnel durchlaufen sollte.

In einer anderen vorteilhaften Ausführungsform erfolgt die Trocknung des gegebenenfalls ausgeformten Futtermittel-Vorprodukts bis ein Feuchtigkeitsgehalt zwischen 5 Gew.-% und 40 Gew.-% erreicht ist, insbesondere bei einer Temperatur zwischen 50°C und 200°C. In dem Temperaturbereich zwischen 50°C und 200°C stehen die Zeit, die benötigt wird um einen Feuchtigkeitsgehalt zwischen 5 Gew.-% und 40 Gew.-% zu erreichen und die für die Trocknung aufzuwendende Energie in einem günstigen Verhältnis.

Auch kann die Trocknung des gegebenenfalls ausgeformten Futtermittel-Vorprodukts bis ein Feuchtigkeitsgehalt zwischen 5 Gew.-% und 40 Gew.-% erreicht ist vorteilhafterweise in einem Temperaturbereich zwischen 80°C und 90°C erfolgen. Überraschenderweise wurde gefunden, dass in diesem Temperaturbereich das Verhältnis zwischen wirtschaftlich günstiger Trocknung und Erhalt der Nährstoffe im erfindungsgemäßen fleischbasierten Futtermittelkonzentrat am höchsten ist.

Das gegebenenfalls ausgeformte Futtermittel-Vorprodukt kann beispielsweise so weit getrocknet werden, bis das gegebenenfalls ausgeformte Futtermittel-Vorprodukt einen Feuchtigkeitsgehalt von etwa 10 Gew.-% bis 25 Gew.-%, insbesondere von etwa 12 Gew.-%, aufweist. Der sich im erfindungsgemäßen Verfahren anschließende Mahlvorgang ergibt bei einem Feuchtigkeitsgehalt des gegebenenfalls ausgeformten Futtermittel-Vorprodukts von etwa 12 Gew.-% ein besonders homogenes Mahlergebnis.

In einer anderen vorteilhaften Ausführungsform werden die Zutaten zur Herstellung des Futtermittel-Vorprodukts vollständig oder teilweise gefroren eingesetzt. Überraschenderweise konnte hier festgestellt werden, dass ein solches Futtermittel-Vorprodukt beim Hinzufügen der ein oder mehreren Verdickungsmittel besonders kurze Vermischungszeiten benötigt und entsprechend besonders wirtschaftlich ist.

In einer weiteren vorteilhaften Ausführungsform werden die Zutaten zur Herstellung des Futtermittel-Vorprodukts vor dem Beschicken des Kutters mittels Führung durch eine oder mehrere Lochscheiben zerkleinert. Es hat sich vorliegend gezeigt, dass eine Zerkleinerung vor dem Vorgang des Kutterns zu einem homogeneren Futtermittel-Vorprodukt führt und in Folge dessen der Vorgang des Kutterns nicht übermäßig ausgedehnt werden muss, sodass die tierischen Proteine bestmöglich erhalten bleiben.

In einer anderen vorteilhaften Ausführungsform werden den Zutaten zur Herstellung des Futtermittel-Vorprodukts vor dem Kuttern Gemüse und/oder Getreide und/oder Kartoffeln und/oder Glycerin zugesetzt. Diese weiteren Futterbestandteile dienen einer besseren technischen Verarbeitung des Futters, in dem Sinne, dass das Futtermittel-Vorprodukt leichter zu verarbeiten ist, da es weniger klebt. Überraschenderweise wurde gefunden, dass die Klebrigkeit des Futtermittel-Vorprodukts dadurch gesenkt werden kann, dass die genannten weiteren Futterbestandteile vor dem Vorgang des Kutterns den Zutaten zur Herstellung des Futtermittel-Vorprodukts zugesetzt werden.

In einer anderen vorteilhaften Ausführungsform werden Zusatzstoffe, die in der Futtermittelindustrie üblich sind, beigefügt. Insbesondere handelt es sich dabei um Aromen, natürliche oder synthetische Farbstoffe, inaktivierte Hefen oder Hefeextrakte, Pflanzenextrakte und/oder -konzentrate, Konservierungsstoffe, Zucker und/oder funktionelle Zutaten. Unter funktionellen Zutaten werden beispielsweise Probiotika, aber auch Vitamine, Mineralstoffe, Omega-3-Fettsäuren, probiotische Ballaststoffe und probiotische Mikroorganismen verstanden.

Im Verfahren können Konservierungsstoffe, wie Kaliumsorbat, eingesetzt werden. Beispielsweise kann Kaliumsorbat in einer Konzentration zwischen 0,1 Gew.-% und 1 Gew.-% bezogen auf das Gesamtgewicht des Futtermittel-Vorprodukts eingesetzt werden. Eine Zugabe von Kaliumsorbat in einer Menge von etwa 0,5 Gew.-% bezogen auf das Gesamtgewicht des Futtermittel-Vorprodukts führt zu einer Mindesthaltbarkeit des erfindungsgemäßen fleischbasierten Futtermittelkonzentrats von etwa 15 bis 18 Monaten.

Vorteilhafterweise brauchen keine Bindemittel, wie beispielsweise Carragen, Gelatine, Agar-Agar oder Pektin eingesetzt zu werden. Auch Milchprodukte bzw. deren Eiweiß müssen nicht zugesetzt werden. Dies ist im Hinblick auf mögliche Unverträglichkeiten gegenüber Milchprodukten bzw. Milcheiweiß von Vorteil.

Im Verfahren kann das fleischbasierte Futtermittelkonzentrat vorteilhafterweise mit einer Mischung aus Tiermehl und Süßmolkepulver, das mit Fett, wie Geflügelfett, besprüht ist, vermischt werden. Vorteil dieser Ausführungsform ist, dass ein besonderer Geruch erzielt wird, der nachfolgend für den Futterdrink bzw. für das beispielsweise mit einer Flüssigkeit angerührte Futtermittelkonzentrat zu einer besonderen Akzeptanz führt.

Das erfindungsgemäße fleischbasierte Futtermittelkonzentrat ist durch das erfindungsgemäße Verfahren erhältlich.

Der erfindungsgemäße fleischbasierte Futterdrink ist durch Vermischen des erfindungsgemäß hergestellten Futtermittelkonzentrats mit Flüssigkeiten wie Wasser oder Milch, insbesondere Kuhmilch und sogenannter Katzenmilch - also einem für Katzen vorgesehenen Produkt - erhältlich.

Der fleischbasierte Futterdrink kann eine sämige oder cremige Konsistenz aufweisen. Es wurde festgestellt, dass Tiere - unabhängig von der tierartlichen Zugehörigkeit - bezüglich der akzeptierten Konsistenz des fleischbasierten Futterdrinks unterschiedlich reagieren können.

Der erfindungsgemäße fleischbasierte Futterdrink weist vorteilhafterweise einen pH-Wert zwischen 5 und 6,5 auf. Futtermittel mit diesem pH-Wert sind mikrobiologisch und ernährungsphysiologisch insbesondere für fleischfressende Tiere besonders günstig.

Erfindungsgemäß erfolgt die Verwendung des erfindungsgemäßen fleischbasierten Futterdrinks als Tierfutter, wie Vollfutter oder Snack, für fleischfressende Haustiere, wie Hunde oder Katzen.

Des Weiteren wird erfindungsgemäß eine Verpackungseinheit für ein erfindungsgemäßes fleischbasiertes Futtermittelkonzentrat und/oder einen erfindungsgemäßen fleischbasierten Futterdrink bereitgestellt, wobei die Verpackungseinheit innerhalb eines Verpackungsvolumens mit dem erfindungsgemäßen fleischbasierten Futtermittelkonzentrat und/oder dem erfindungsgemäßen fleischbasierten Futterdrink, oder separat in einem zusätzlichen Kompartiment der Verpackung, ein Tierfutter für fleischfressende Haustiere, wie Trockenfutter, enthält.

Mit dem vorstehend beschriebenen Verfahren wird ein neues fleischbasiertes Futtermittelkonzentrat erhalten, das zu mindestens 30 Gew.-%, insbesondere zwischen 30 Gew.-% und 95 Gew.-%, weiter insbesondere zwischen 40 Gew.-% und 80 Gew.-%, zum Beispiel zwischen 60 Gew.-% und 70 Gew.-% bezogen auf das Gesamtgewicht des Futtermittel-Vorprodukts ausschließlich aus Fleisch, beispielsweise auch getrocknetem - gegebenenfalls zu Mehl vermahlenem - Fleisch, besteht.

Das erfindungsgemäße fleischbasierte Futtermittelkonzentrat kann mit Farbstoffen eingefärbt sein. Es hat sich gezeigt, dass diese Maßnahme die Akzeptanz des Produkts beim Tierhalter weiter erhöht.

Im Folgenden wird die Erfindung anhand eines Ausführungsbeispiels näher beschrieben, das lediglich zur Veranschaulichung einer möglichen Ausführungsform dient und in keiner Weise schutzbeschränkend sein soll.

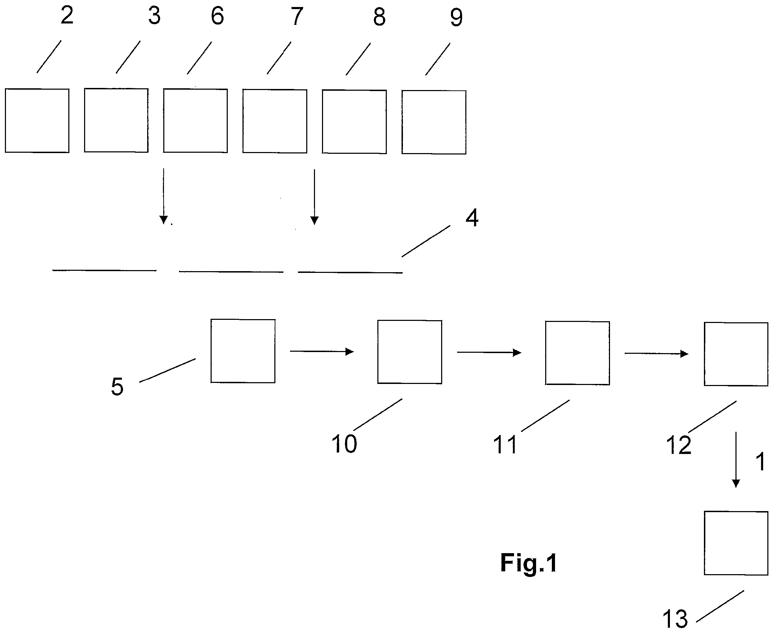

Die einzige Figur 1 zeigt eine schematische Darstellung zur Herstellung eines erfindungsgemäßen fleischbasierten Futtermittelkonzentrats. Zunächst werden die Zutaten der Gruppe "Fleisch" in den Kutter 5 gegeben. Diese Zutaten befinden sich in den Behältern 2 und ggf. 3 (falls getrennte Behälter z.B. für Fleisch unterschiedlicher Tierarten vorgesehen sind) und werden von dort dem Kutter 5 zugeführt. Daneben befinden sich in weiteren Behältern Gemüse 6 beziehungsweise Getreide 7 beziehungsweise Kartoffeln 8 beziehungsweise Glycerin 9, die den fleischigen Zutaten zugesetzt werden können. Mit 4 sind Lochscheiben bezeichnet, die dem Kutter 5 vorgeschaltet sind und zur Zerkleinerung zumindest der fleischigen Zutaten zur Herstellung des Futtermittel-Vorprodukts dienen. Nach dem Kutter 5 gelangt das Futtermittel-Vorprodukt zur Extrusion in einen Extruder 10. Vom Extruder 10 wird das ausgeformte Futtermittel-Vorprodukt in einen Trockner geleitet, der mit 11 bezeichnet ist. Daran schließt sich eine Mühle 12 an, die beispielsweise das extrudierte getrocknete Futtermittel-Vorprodukt zu Partikeln mit einer durchschnittlichen Größe von 0,5 mm bis 5 mm zermahlt. Beispielsweise über ein Rohr (in Fig.1 nicht dargestellt) wird dem partikelförmigen getrockneten Futtermittel-Vorprodukt aus einem weiteren Behälter (ebenfalls in Fig.1 nicht dargestellt) Verdickungsmittel zugeführt. Das Endprodukt, also das fleischbasierte Futtermittelkonzentrat 1, wird noch Bearbeitungs- und/oder Abpackeinheiten, hier pauschal mit 13 bezeichnet, zugeführt.

## Patentansprüche

1. Verfahren zur Herstellung eines fleischbasierten Futtermittelkonzentrats (1), **dadurch gekennzeichnet, dass**
a. ein Kutter (5) zur Herstellung eines Futtermittel-Vorprodukts mit wenigstens folgenden Zutaten beschickt wird, die eine Temperatur aufweisen, die gleich oder geringer ist als + 25°C, insbesondere zwischen -18°C und +7°C: wenigstens ein Bestandteil der Gruppe Fleisch;
b. die Zutaten zu einem Futtermittel-Vorprodukt mit einem Feuchtigkeits-Gehalt zwischen 30 Gew.-% und 60 Gew.-%und einer Korngrößenverteilung im Bereich von 10 mm bis 0,1 mm oder kleiner für 5 bis 15 Minuten gekuttert werden;
c. gegebenenfalls das Futtermittel-Vorprodukt getrocknet wird, um ein Feuchtigkeitsgehalt zwischen 5 Gew.-% und 40 Gew.-% zu erreichen,
d. das Futtermittel-Vorprodukt mit einem Feuchtigkeitsgehalt zwischen 5 Gew.-% und 40 Gew.-% zu Partikeln mit einer Größe zwischen 0,5 mm und 5 mm zerkleinert wird; und
e. den Partikeln des getrockneten Futtermittel-Vorprodukts ein oder mehrere Verdickungsmittel, insbesondere ausgewählt aus der Gruppe: Guarkernmehl, Carboxymethylcellulose, Xanthan, Carragen und Stärke hinzugefügt, um das fleischbasierte Futtermittelkonzentrat (1) zu erhalten.

2. Verfahren nach Anspruch 1, wobei nach dem Kuttern gemäß Schritt b.) und vor dem optionalen Trocknen gemäß Schritt c.) gegebenenfalls durch Extrusion das Futtermittel-Vorprodukt ausgeformt wird.

3. Verfahren nach Anspruch 1 oder 2, **dadurch gekennzeichnet, dass** die Zutaten vollständig oder teilweise gefroren eingesetzt werden.

4. Verfahren nach Anspruch 1 bis 3, **dadurch gekennzeichnet, dass** die Zutaten vor der Beschickung des Kutters (5) mittels Führung durch eine oder mehrere Lochscheiben (4) zerkleinert werden.

5. Verfahren nach einem der vorhergehenden Ansprüche, **dadurch gekennzeichnet, dass** den Zutaten zur Herstellung des Futtermittel-Vorprodukts vor dem Kuttern Gemüse und/oder Getreide und/oder Kartoffeln und/oder Glycerin zugesetzt wird.

6. Verfahren nach einem der vorhergehenden Ansprüche, **dadurch gekennzeichnet, dass** in der Futtermittelindustrie übliche Zusatzstoffe beigefügt werden, insbesondere Aromen, natürliche oder synthetische Farbstoffe, inaktivierte Hefe oder Hefeextrakte, Pflanzenextrakte und/oder -konzentrate, Konservierungsstoffe, Zucker und/oder funktionelle Zutaten.

7. Verfahren nach einem der vorhergehenden Ansprüche, **dadurch gekennzeichnet, dass** das fleischbasierte Futtermittelkonzentrat (1) mit einer Mischung aus Tiermehl und Süßmolkepulver, das mit Fett, wie Geflügelfett, besprüht ist, vermischt wird.

8. Fleischbasiertes Futtermittelkonzentrat (1) erhältlich durch einen der Ansprüche 1 bis 7.

9. Fleischbasierter Futterdrink erhältlich durch Vermischen des nach einem der Ansprüche 1 bis 7 hergestellten fleischbasierten Futtermittelkonzentrats (1) oder des fleischbasierten Futtermittelkonzentrats (1) nach Anspruch 8 mit Flüssigkeiten.

10. Fleischbasierter Futterdrink nach Anspruch 9, wobei die Flüssigkeit Wasser oder Milch ist.

11. Fleischbasierter Futterdrink nach Anspruch 9 oder 10 mit einem pH-Wert zwischen 5,0 und 6,5.

12. Verwendung des fleischbasierten Futterdrinks nach einem der Ansprüche 9 bis 11 als Tierfutter für fleischfressende Haustiere.

13. Verwendung nach Anspruch 12, wobei das Tierfutter als Vollfutter oder Snack ausgebildet ist.

14. Verwendung nach Anspruch 12 oder 13, wobei dieser als Tierfutter für Hunde oder Katzen verwendet wird.

15. Verpackungseinheit für ein fleischbasiertes Futtermittelkonzentrat (1) nach Anspruch 8 und/oder einen fleischbasierten Futterdrink nach einem der Ansprüche 9 bis 11, **dadurch gekennzeichnet, dass** die Verpackungseinheit innerhalb eines Verpackungsvolumens mit dem fleischbasierten Futtermittelkonzentrat (1) nach Anspruch 8 und/oder dem fleischbasierten Futterdrink nach einem der Ansprüche 9 bis 11, oder separat in einem zusätzlichen Kompartiment der Verpackung, ein Tierfutter für fleischfressende Haustiere, wie Trockenfutter, enthält.

## Claims

1. Process for the preparation of a meat-based feed concentrate (1), **characterized in that**
a) a cutter (5) is fat with at least the following ingredients at a temperature equal to or less than +25°C, in particular, in between -18° and +7° C to produce a feed product: at least one component of the meat group;
b) the ingredients are cut into a feed pre-product with a moisture content of between 30 % and 60 % by weight and a particle sizes to be in the range of 10 mm to 0.1 mm or less for 5 to 15 minutes;
c) optionally the feed precursor is dried to a moisture content in between 5 % and 40% by weight;
d) the feed pre-product having a moisture content between 5 % and 40 % by weight is cut into particles having a size in between 0.5 mm and 5 mm; and
e) one or more thickening agents, in particular selected from the group: guar gum, carboxymethylcellulose, xanthan gum, carrageenan and starch, are added to the particles of the dried feed pre-product to obtain the meat based feed concentrate (1).

2. The process according to claim 1, wherein after the cutting according to step b) and before the optional drying according to step c) the feed pro-product is optionally formed by extrusion.

3. The process according to claim 1 or 2, **characterized in that** the ingredients are used completely or partially frozen.

4. The process according to claim 1 to 3, **characterized in that** the ingredients are comminuted by guiding them through one or more perforated discs (4) before feeding the cutter (5).

5. The process according to any one of the preceding claims, **characterized in that** vegetables and/or cereals and/or potatoes and/or glycerine are added to the ingredients for the preparation of the feed pro-product before cutting.

6. The process according to any one of the preceding claims, **characterized in that** additives customary in the feed industry are added, in particular, flavorings, natural or synthetic colorants, inactivated yeast or yeast extracts, plant extracts and/or concentrates, preservatives, sugars and/or functional ingredients.

7. The process according to any one of the preceding claims, **characterized in that** the meat-based feed concentrate (1) is mixed with a mixture of meat and bone meal and sweet whey powder sprayed with fat, such as poultry fat.

8. Meat-based feed concentrate (1) obtainable by any one of claims 1 to 7.

9. Meat-based feed drink obtainable by mixing the meat-based feed concentrate (1) produced according to any one of claims 1 to 7 or the meat-based feed concentrate (1) according to claim 8 with liquids.

10. Meat-based feed drink according to claim 9, whereby the liquid is water or milk.

11. Meat-based feed drink according to claim 9 or 10 having a pH value of between 5.0 and 6.5.

12. Use of the meat-based feed drink according to any one of claims 9 to 11 as a pet food for carnivorous pets.

13. The use according to claim 12, whereby the pet food is a complete feed or snack.

14. The use according to claim 12 or 13, whereby the pet food is use as pet food for dogs or cats.

15. A packaging unit for a meat-based feed concentrate (1) according to claim 8 and/or a meat-based feed drink according to any one of claim 9 to 11, **characterized in that** the packaging unit contains within a packaging volume with the meat based feed concentrate (1) according to claim 8 and/or the meat-based feed drink according to any one of claims 9 to 11, or separately in an additional compartment of the packaging, an animal feed for carnivorous pets, such as dry feed.

## Revendications

1. Procédé de préparation d'un concentré alimentaire pour animaux à base de viande (1), **caractérisé en ce que**
a. pour produire un produit préliminaire d'alimentation animale, un cutter (5) est chargé avec au moins les ingrédients suivants à une température égale ou inférieure à + 25 °C, en particulier comprise entre -18 °C et +7 °C :
au moins un composant du groupe des viandes ;
b. les ingrédients sont découpés en un produit préliminaire d'alimentation animale ayant une teneur en humidité comprise entre 30 % et 60 % en poids et une granulométrie dans la plage de 10 mm à 0,1 mm ou moins pendant 5 à 15 minutes ;
c. le cas échéant, le produit préliminaire d'alimentation animale est séché pour obtenir une teneur en humidité comprise entre 5 % et 40 % en poids,
d. le produit préliminaire d'alimentation animale ayant une teneur en humidité comprise entre 5 % et 40 % en poids est broyé pour donner des particules d'une taille comprise entre 0,5 mm et 5 mm ; et
e. un ou plusieurs agents épaississants, en particulier choisis parmi le groupe : gomme de guar, carboxyméthylcellulose, gomme de xanthane, carraghénane et amidon, sont ajoutés aux particules du produit préliminaire d'alimentation animale séché, afin d'obtenir le concentré alimentaire à base de viande (1).

2. Procédé selon la revendication 1,
dans lequel, après la découpe selon l'étape b.) et avant le séchage optionnel selon l'étape c.), le produit préliminaire d'alimentation animale est éventuellement mis en forme par extrusion.

3. Procédé selon la revendication 1 ou 2,
**caractérisé en ce que** les ingrédients sont utilisés complètement ou partiellement sous forme congelée.

4. Procédé selon les revendications 1 à 3,
**caractérisé en ce qu'**avant de charger le cutter (5), les ingrédients sont broyés par guidage à travers un ou plusieurs disques perforés (4).

5. Procédé selon l'une des revendications précédentes,
**caractérisé en ce que** des légumes et/ou des céréales et/ou des pommes de terre et/ou de la glycérine sont ajoutés aux ingrédients pour la préparation du produit préliminaire d'alimentation animale, avant la découpe.

6. Procédé selon l'une des revendications précédentes,
**caractérisé en ce que** des additifs usuels dans l'industrie des aliments pour animaux sont ajoutés, en particulier des arômes, des colorants naturels ou synthétiques, de la levure ou des extraits de levure inactivés, des extraits et/ou des concentrés de plantes, des conservateurs, du sucre et/ou des ingrédients fonctionnels.

7. Procédé selon l'une des revendications précédentes,
**caractérisé en ce que** le concentré alimentaire pour animaux à base de viande (1) est mélangé à un mélange de farine animale et de lactosérum doux en poudre pulvérisé avec de la graisse, telle que la graisse de volaille.

8. Concentré alimentaire pour animaux à base de viande (1) pouvant être obtenu par l'une des revendications 1 à 7.

9. Boisson à base de viande pour alimentation animale, pouvant être obtenue en mélangeant le concentré alimentaire pour animaux à base de viande (1) préparé selon l'une des revendications 1 à 7 ou le concentré alimentaire pour animaux à base de viande (1) selon la revendication 8 avec des liquides.

10. Boisson à base de viande pour alimentation animale selon la revendication 9, dans laquelle le liquide est de l'eau ou du lait.

11. Boisson à base de viande pour alimentation animale selon la revendication 9 ou 10 avec un pH compris entre 5,0 et 6,5.

12. Utilisation de la boisson à base de viande pour alimentation animale selon l'une des revendications 9 à 11 comme aliment pour animaux domestiques carnivores.

13. Utilisation selon la revendication 12,
dans laquelle l'aliment pour animaux est conçu comme un aliment complet ou une collation.

14. Utilisation selon la revendication 12 ou 13,
dans laquelle l'aliment pour animaux est utilisé comme aliment pour chiens ou chats.

15. Unité d'emballage pour un concentré alimentaire pour animaux à base de viande (1) selon la revendication 8 et/ou pour une boisson à base de viande pour alimentation animale selon l'une des revendications 9 à 11, **caractérisée en ce que** l'unité d'emballage contient dans un volume d'emballage avec le concentré alimentaire à base de viande (1) selon la revendication 8 et/ou avec la boisson alimentaire à base de viande selon l'une des revendications 9 à 11, ou séparément dans un compartiment supplémentaire de l'emballage, un aliment pour animaux carnivores, tel qu'un aliment sec.
